# EUROPEAN PATENT APPLICATION

(11) **EP 4 564 203 A1**
(43) Date of publication of application: **04.06.2025**
(21) Application number: 23896434.0
(22) Date of filing: 01.11.2023
(51) Int. Cl.: G06F 21/44

(54) **APPLICATION PERMISSION ACTIVATION METHOD, MEDIUM, AND ELECTRONIC DEVICE**

(30) Priority: 30.11.2022 CN 202211523920; 30.12.2022 CN 202211732378
(71) Applicant: Huawei Technologies Co., Ltd., Shenzhen, Guangdong 518129 (CN)
(72) Inventor: XU, Bei, Shenzhen, Guangdong 518129 (CN); LUO, Wei, Shenzhen, Guangdong 518129 (CN); JIANG, Lulu, Shenzhen, Guangdong 518129 (CN)
(74) Representative: Körber, Martin Hans
(86) International application number: PCT/CN2023/129043
(87) International publication number: WO 2024/114280

(57) **Abstract**

This application relates to the field of communication technologies, and provides an application permission activation method, a medium, and an electronic device, so that permission for an application or an in-app service in a lightweight device can be activated by using a full-range device, to promote a more prosperous application ecosystem of an intelligent wearable device or the like. The method includes: In response to an operation of starting a first application installed on a first device, the first device determines a permission activation status of the first application. When the permission activation status is unactivated, the first device sends a first message to a second device, where the first message includes a device type of the first device and the permission activation status of the first application. When determining that the device type is a preset type and the permission activation status is unactivated, the second device starts a second application on the second device, where the second application has an association relationship with the first application. The second device activates permission for the first application by using the second application. The second device sends a second message to the first device, where the second message indicates that the permission for the first application is already activated.

## Description

This application claims priorities to Chinese Patent Application No. 202211523920.2, filed with the China National Intellectual Property Administration on November 30, 2022, and entitled "APPLICATION PERMISSION ACTIVATION METHOD AND DEVICE", and to Chinese Patent Application No. 202211732378.1, filed with the China National Intellectual Property Administration on December 30, 2022, and entitled "APPLICATION PERMISSION ACTIVATION METHOD, MEDIUM, AND ELECTRONIC DEVICE", both of which are incorporated herein by reference in their entireties.

### TECHNICAL FIELD

This application relates to the field of communication technologies, and in particular, to an application permission activation method, a medium, and an electronic device.

### BACKGROUND

Some wearable devices such as a mobile phone and a smartwatch have rich hardware resources and can be independently connected to a network. To attract more ecosystem developers, device manufacturers of these electronic devices support paid download of an application by using an application market, and support paid activation of a service through in-app purchase and the like, to provide more commercial monetization opportunities for the developers, thereby encouraging ecosystem developers of mobile phones and wearable devices to more actively participate in ecosystem prosperity. However, some other wearable devices such as sports watch series operate a real-time operating system (Real-Time Operating System, RTOS) and are limited in hardware resources. In this case, the wearable devices can support neither an independent network connection nor an independent application market on a watch side, and cannot implement an application download payment function or an in-app purchase function, resulting in slow development of an ecosystem of a sports watch with an RTOS system.

### SUMMARY

Embodiments of this application provide an application permission activation method, a medium, and an electronic device, so that permission for an application or an in-app service in a lightweight device can be activated by using a full-range device, to promote a more prosperous application ecosystem of an intelligent wearable device, and attract more developers to develop more ecosystem applications on a device side such as a sports watch.

According to a first aspect, an embodiment of this application provides an application permission activation method. The method includes:
in response to an operation of starting a first application installed on a first device, the first device determines a permission activation status of the first application;
when the permission activation status is unactivated, the first device sends a first message to a second device, where the first message includes a device type of the first device and the permission activation status of the first application;
when determining that the device type is a preset type and the permission activation status is unactivated, the second device starts a second application on the second device, where the second application has an association relationship with the first application;
the second device activates permission for the first application by using the second application; and
the second device sends a second message to the first device, where the second message indicates that the permission for the first application is already activated.

It may be understood that the first device may be a sports watch 200 described below, the second device may be a mobile phone 100 described below, the first application is a third-party application 2 described below, the second application is a third-party application 1 described below, and the permission activation status is a service activation status described below. The first message may be a device reporting message described below, and the second message may be an activation complete message described below. The operation may be an operation that a user starts the first application on the first device for the first time. In addition, the first application and the second application may be applications of a same manufacturer. For example, application names of the first application and the second application are the same, or functions of the first application and the second application are the same (that is, services running in the first application and the second application are the same). However, this is not limited thereto.

In this way, the second device can activate, by using the second application and an application market, the first application or an in-app service that has an association relationship on the second device side. Further, the second device notifies the first device that the first application or the service is already activated, so that the first device normally uses the first application or the service, to implement cross-device activation. In this case, even if the first device cannot be connected to a network or support an independent application market, the first device can still complete activation of the first application installed on the first device.

In a possible implementation of the first aspect, the method further includes: If the permission activation status is unactivated, the first device displays a first application interface, where the first application interface is used to prompt a user to download or start the second application on the second device.

The first application interface may be a prompt interface described below. In this case, the user may be prompted to timely manually download or start the second application on the second device side, to subsequently use the second application to activate the first application in a cross-device manner.

In a possible implementation of the first aspect, the method further includes: The second device sends a third message to the first device when starting the second application, where the third message is used to obtain the device type of the first device and the permission activation status of the first application.

The third message may be a device query message described below. In this case, the second device actively reports the third message, so that the second device subsequently activates a corresponding application timely.

In a possible implementation of the first aspect, the method further includes: The second device displays a second application interface when determining that the device type is the preset type and the permission activation status is unactivated, where the second application interface is used to activate the permission for the first application.

The second application interface may be an activation interface described below, and may interact with the application market in the second device.

In a possible implementation of the first aspect, the preset type is a lightweight device, for example, a sports watch or a band.

In a possible implementation of the first aspect, the method further includes:
the first device sends a fourth message to the second device, where the fourth message is used to obtain an installation status of the second application on the second device; and
if the installation status is uninstalled, the first device sends a fifth message to the second device, where the fifth message indicates the first device to automatically open a download interface of the second application; or
if the installation status is installed, the first device sends a sixth message to the second device, where the sixth message indicates the first device to automatically start the second application.

The fourth message may be an installation query message. The fifth message and the sixth message may be an installation response message described below. In this way, an interface for downloading the second application on the second device may be automatically opened, or an interface for downloading the second application may be automatically opened, so that the user quickly and conveniently activates the first application.

In a possible implementation of the first aspect, the method further includes:
the first device displays a third application interface based on the second message, where the third application interface is a normal running interface of the first application.

The third application interface may be a running interface described below. In this case, after the second device activates the first application in a cross-device manner, the first device can normally use the first application, that is, use an overall service in the first application or a specific service in the first application.

In a possible implementation of the first aspect, the method further includes:
the first device changes the permission activation status of the first application to activated based on the second message.

In this way, when the first device starts the first application and learns through query that the permission activation status of the first application is activated, the first device can normally display a running interface of the first application, and normally use a service or function in the first application.

In a possible implementation of the first aspect, the permission for the first application is use permission for an overall service in the first application or use permission for a service in the first application.

In a possible implementation of the first aspect, an activation manner of the first application includes at least one of the following: a payment activation manner, a face authentication manner, a fingerprint authentication manner, and a character password authentication manner. This facilitates authorization management on the permission of the first application. Then, the user has permission to use the first application only when the first application is successfully activated.

In a possible implementation of the first aspect, when an activation manner of the first application is a payment activation manner, the second device uses the second application to invoke an application market to perform in-app purchase, to activate the permission for the first application. In this way, even if the first device does not support a payment function, the first device can pay for the first application by using the second device, to implement a cross-device payment function, so as to implement cross-device application activation.

In a possible implementation of the first aspect, a first distributed communication SDK is deployed in the first device, a second distributed communication SDK is deployed in the second device, and message transmission between the first device and the second device is performed based on the first distributed communication SDK and the second distributed communication SDK.

This can implement distributed communication between the second application installed on the first device and the first application that is installed on the second device and that has the association relationship with the first application, to implement transmission of information such as the device type of the first device and information about the permission activation status of the first application installed on the first device.

In a possible implementation of the first aspect, the first message is sent by the first device to an interface of the second distributed communication SDK by invoking an interface of the first distributed communication SDK by using the first application, and the first message is transmitted to the second application through the interface of the second distributed communication SDK; and
the second message is sent by the second device to the interface of the first distributed communication SDK by invoking the interface of the second distributed communication SDK by using the second application, and the second message is transmitted to the first application through the interface of the first distributed communication SDK.

This can implement transmission of information between the first application and the second application, so that the second device activates, by using the second application, the first application on the first device in a cross-device manner.

According to a second aspect, an embodiment of this application provides an application permission activation method, applied to a first device, where the method includes:
in response to an operation of starting a first application installed on a first device, the first device determines a permission activation status of the first application;
when the permission activation status is unactivated, the first device sends a first message to a second device, where the first message includes a device type of the first device and the permission activation status of the first application; and
the first device receives a second message from the second device, where the second message indicates that permission for the first application is already activated, the permission for the first application is activated by the second device by using a second application when the second device determines that the device type is a preset type and the permission activation status is unactivated, and the second application has an association relationship with the first application.

In a possible implementation of the second aspect, the method further includes:
if the permission activation status is unactivated, the first device displays a first application interface, where the first application interface is used to prompt a user to download or start the second application on the second device.

In a possible implementation of the second aspect, the preset type is a lightweight device.

In a possible implementation of the second aspect, the method further includes:
the first device sends a fourth message to the second device, where the fourth message is used to obtain an installation status of the second application installed on the second device; and
if the installation status is uninstalled, the first device sends a fifth message to the second device, where the fifth message indicates the second device to automatically open a download interface of the second application; or
if the installation status is installed, the first device sends a sixth message to the second device, where the sixth message indicates the second device to automatically start the second application.

In a possible implementation of the second aspect, the method further includes:
the first device displays a third application interface based on the second message, where the third application interface is a normal running interface of the first application.

In a possible implementation of the second aspect, the method further includes:
the first device changes the permission activation status of the first application to activated based on the second message.

In a possible implementation of the second aspect, the permission for the first application is use permission for an overall service in the first application or use permission for a service in the first application.

In a possible implementation of the second aspect, an activation manner of the first application includes at least one of the following: a payment activation manner, a face authentication manner, a fingerprint authentication manner, and a character password authentication manner.

In a possible implementation of the second aspect, a first distributed communication SDK is deployed in the first device, a second distributed communication SDK is deployed in the second device, and message transmission between the first device and the second device is performed based on the first distributed communication SDK and the second distributed communication SDK.

In a possible implementation of the second aspect, the first message is sent by the first device to an interface of the second distributed communication SDK by invoking an interface of the first distributed communication SDK by using the first application, and the first message is transmitted to the second application through the interface of the second distributed communication SDK; and
the second message is sent by the second device to the interface of the first distributed communication SDK by invoking the interface of the second distributed communication SDK by using the second application, and the second message is transmitted to the first application through the interface of the first distributed communication SDK.

According to a third aspect, an embodiment of this application provides an application permission activation method, applied to a second device, where the method includes:
the second device receives a first message from a first device, where the first message includes a device type of the first device and a permission activation status of a first application installed on the first device;
when determining that the device type is a preset type and the permission activation status is unactivated, the second device starts a second application on the second device, where the second application has an association relationship with the first application;
the second device activates permission for the first application by using the second application; and
the second device sends a second message to the first device, where the second message indicates that the permission for the first application is already activated.

In a possible implementation of the third aspect, the method further includes:
when the second device starts the second application, the second application sends a third message to the first device, where the third message is used to obtain the device type of the first device and the permission activation status of the first application.

In a possible implementation of the third aspect, the method further includes:
the second device displays a second application interface when determining that the device type is the preset type and the permission activation status is unactivated, where the second application interface is used to activate the permission for the application.

In a possible implementation of the third aspect, the preset type is a lightweight device.

In a possible implementation of the third aspect, the permission for the first application is use permission for an overall service in the first application or use permission for a service in the first application.

In a possible implementation of the third aspect, an activation manner of the first application includes at least one of the following: a payment activation manner, a face authentication manner, a fingerprint authentication manner, and a character password authentication manner.

In a possible implementation of the third aspect, when an activation manner of the first application is a payment activation manner, the second device uses the second application to invoke an application market to perform in-app purchase, to activate the permission for the first application.

In a possible implementation of the third aspect, a first distributed communication SDK is deployed in the first device, a second distributed communication SDK is deployed in the second device, and message transmission between the first device and the second device is performed based on the first distributed communication SDK and the second distributed communication SDK.

In a possible implementation of the third aspect, the first message is sent by the first device to an interface of the second distributed communication SDK by invoking an interface of the first distributed communication SDK by using the first application, and the first message is transmitted to the second application through the interface of the second distributed communication SDK; and
the second message is sent by the second device to the interface of the first distributed communication SDK by invoking the interface of the second distributed communication SDK by using the second application, and the second message is transmitted to the first application through the interface of the first distributed communication SDK.

According to a fourth aspect, an embodiment of this application provides a readable medium, where the readable medium stores instructions, and when the instructions are executed on an electronic device, the electronic device is enabled to perform the application permission activation method according to the second aspect or any one of the possible implementations of the second aspect, or the application permission activation method according to the third aspect or any one of the possible implementations of the third aspect.

According to a fifth aspect, an embodiment of this application provides an electronic device, including: a memory, configured to store instructions executed by one or more processors of the electronic device, and a processor, where the processor is one of processors of the electronic device, and is configured to perform the application permission activation method according to the second aspect or any one of the possible implementations of the second aspect, or the application permission activation method according to the third aspect or any one of the possible implementations of the third aspect.

### BRIEF DESCRIPTION OF DRAWINGS

FIG. 1 is a diagram of a scenario in which a mobile phone or a smartwatch downloads an application by using an application market according to some embodiments of this application;
FIG. 2 is a diagram of an application download interface of an application market in a mobile phone according to some embodiments of this application;
FIG. 3 is a diagram of a paid download interface of an application on a smartwatch according to some embodiments of this application;
FIG. 4 is a diagram of a scenario in which a mobile phone or a smartwatch obtains a service in a third-party application APP by using an application market according to some embodiments of this application;
FIG. 5 is a diagram of an interface change of an in-app purchase process in a smartwatch according to some embodiments of this application;
FIG. 6 is a block diagram of a software structure of a mobile phone according to some embodiments of this application;
FIG. 7 is a diagram of an application permission activation scenario according to some embodiments of this application;
FIG. 8 is a schematic flowchart of an application permission activation method according to some embodiments of this application;
FIG. 9 is a diagram of an application permission activation scenario according to some embodiments of this application;
FIG. 10 is a schematic flowchart of an application permission activation method according to some embodiments of this application;
FIG. 11 is a diagram of an application permission activation scenario according to some embodiments of this application;
FIG. 12 is a schematic flowchart of an application permission activation method according to some embodiments of this application;
FIG. 13 is a schematic flowchart of an application permission activation method according to some embodiments of this application;
FIG. 14 is a diagram of a structure of a mobile phone according to some embodiments of this application; and
FIG. 15 is a diagram of a structure of a sports watch according to some embodiments of this application.

### DESCRIPTION OF EMBODIMENTS

Illustrative embodiments of this application include but are not limited to an application permission activation method, an apparatus, a medium, and an electronic device.

The application permission activation method provided in embodiments of this application may be applied to a scenario in which an application (Application, App) is activated and/or an in-app service is activated. For example, the in-app service may be a prop, a service, or the like. It may be understood that after the application or the in-app service is activated, permission for the application or the service is granted, and a user can normally use the application or the service.

In some embodiments, the application permission activation scenario includes but is not limited to: activating an application when the application is started in the electronic device for the first time, activating an application when an electronic device is restarted after the application on the electronic device is updated, or activating an in-app service when the service is used in an application on an electronic device for the first time.

In some embodiments, the application permission activation manner includes but is not limited to payment activation, face authentication activation, fingerprint authentication activation, character password activation, and the like.

For example, in the paid activation manner, a payment is made when a to-be-activated application is used, to activate the application, or a payment is made when a to-be-activated in-app service is used, to activate the service.

For example, in another activation manner, authentication activation is performed when a to-be-activated application or a to-be-activated in-app service is used in an electronic device, for example, the application or the service is activated when it is determined that a face image, fingerprint information, and a character password that are collected in real time are the same as corresponding preset information.

The following describes technologies related to paid purchase of an application and an in-app service.

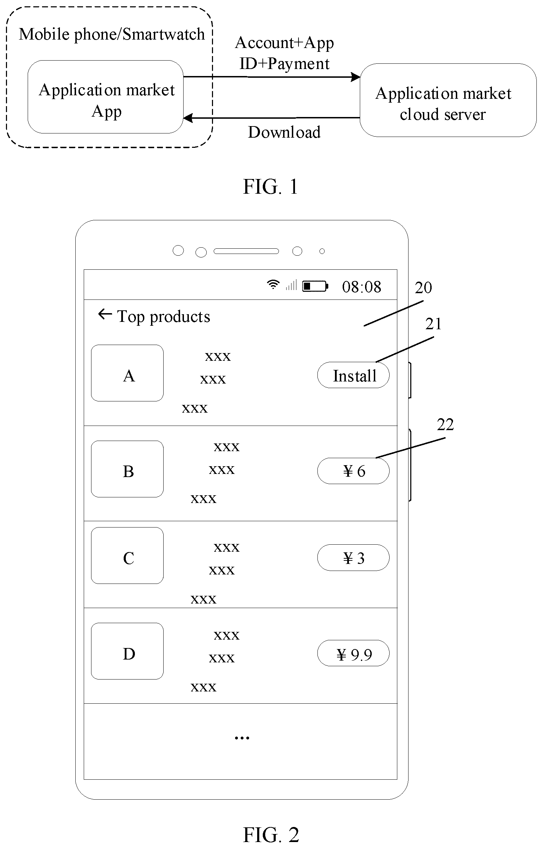

In some related technologies, a mobile phone and a smartwatch may independently pay for downloading an application by using an application market. FIG. 1 is a diagram of a scenario in which a mobile phone or a smartwatch downloads an application by using an application market. Specifically, the mobile phone and the smartwatch may log in to an account of a device manufacturer in an independent application market of the device manufacturer, and interact with an application market server on a cloud based on the account and an identity document (Identity document, ID) of an application, to complete a successful after-payment download process. That is, the mobile phone or the smartwatch interacts with the application market server by using the application market APP in a manner of combining the account, the APP ID, and payment, and downloads, from the server, the application indicated by the APP ID. In this case, the mobile phone and the smartwatch pay for downloading the application, so that the application is activated and a user can normally use the application.

The application market, also referred to as an application store, is a software distribution channel, and common users may browse and download various applications by using the application market. The application market is an application distribution channel that connects application developers and users, and is the foundation for building an ecosystem.

FIG. 2 is a diagram of an application download interface of the application market in the mobile phone. The interface 20 includes information about a plurality of applications, such as an icon, a name (an APP ID), a category, introduction information, an installation button, or a payment installation button of the application. For example, the interface 20 shown in FIG. 2 includes the plurality of applications such as applications A, B, and D. It may be understood that some applications are free applications and may be directly downloaded and installed by tapping the installation button, while some other applications are paid applications and may be downloaded and installed only when payment is completed by tapping the payment installation button. For example, the application A on the interface 20 is a free application, and the user may trigger, by tapping an "Install" button 21, the mobile phone to download the application A from the application market server. The application B on the user interface 20 is a paid application, and the user may trigger, by tapping a "¥6" button (paid installation button) 22, the mobile phone to pay for downloading the application B from the application market server.

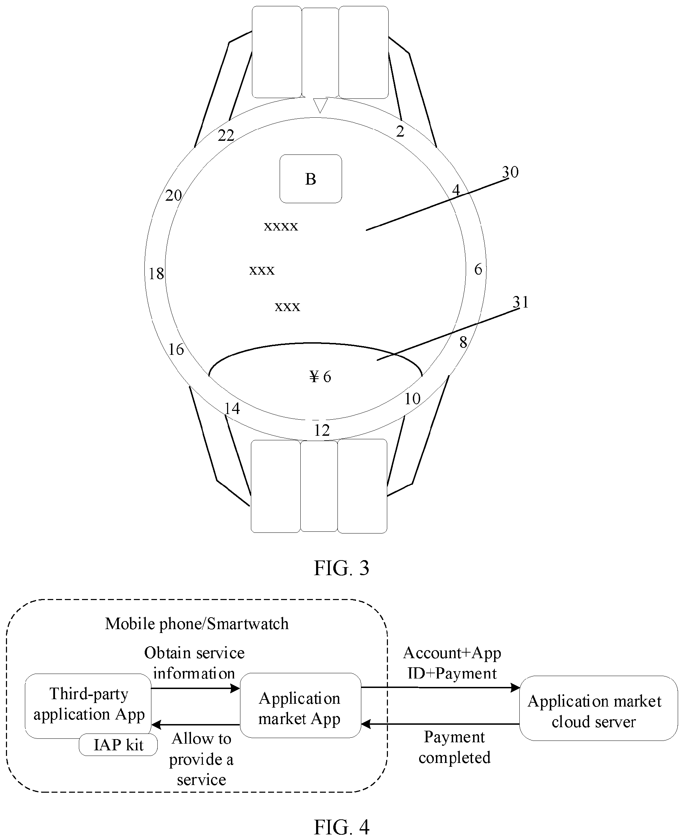

FIG. 3 is a diagram of a paid download interface of an application on the smartwatch. The interface 30 includes information about the application B, such as a score 3.3, a capacity of 20.28 MB, and a "¥ 6" button (paid installation button) 31. The user may trigger, by tapping the "¥ 6" button 31, the smartwatch to pay for downloading the application B from the application market server.

It may be understood that, in a process in which the mobile phone or the smartwatch performs a payment operation, the user needs to input sensitive information such as a payment password.

Therefore, in the foregoing solution in which the mobile phone and the smartwatch independently pay for downloading the application by using the application market, a device side needs to support a network connection, can support an independent application market, and has a capability of storing sensitive information with a high security level, that is, a high requirement is imposed on a hardware capability and computing power of the device. Clearly, a device with limited hardware, such as a sports watch, cannot independently complete paid activation for an application.

In some other related technologies, when a mobile phone and a smartwatch use a third-party application APP, the mobile phone and the smartwatch may independently pay for obtaining a service in the third-party application by using an application market. By providing an in-app purchase (in-app purchase, IAP) kit (kit) and integrating the IAP kit to an ecosystem application (third-party application APP provided in the application market), a device manufacturer provides in-app services, such as purchasing props. In this case, the mobile phone or the smartwatch may interact with a cloud server by using the IAP kit and an independent application market on the smartwatch side, to implement in-app purchase. FIG. 4 is a diagram of a scenario in which the mobile phone or the smartwatch obtains a service in the third-party application APP by using the application market. Specifically, the third-party application APP may obtain information about a to-be-paid service from the application market APP by using the IAP kit, so that the application market APP interacts with an application market cloud server in a manner of combining an account, an APP ID, and payment. After the payment is completed, the application market APP notifies, by using the IAP kit, the third-party application APP that the service is allowed to be provided, that is, the corresponding service is allowed to be used.

It may be understood that the IAP kit is middleware for cross-application communication between the third-party application and the application market, and supports communication between the third-party application and the application market to complete in-app purchase for the third-party application, so as to purchase a service such as a prop in the third-party application.

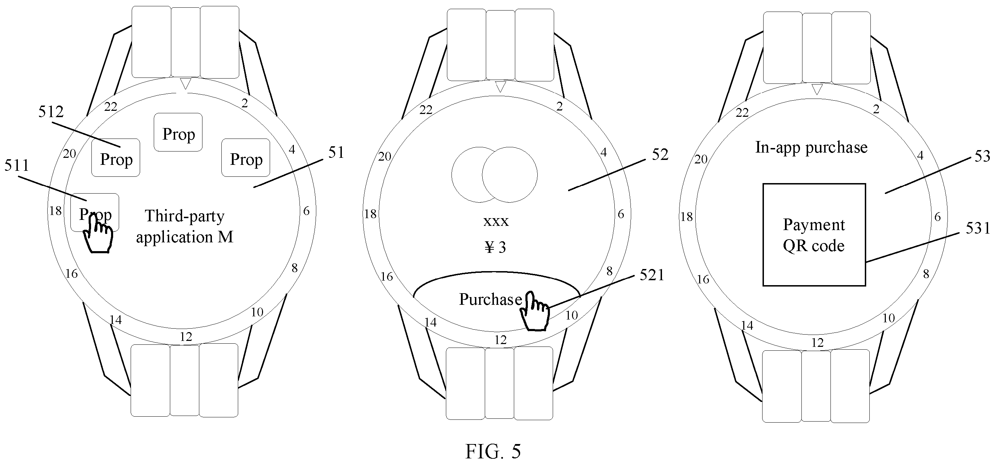

FIG. 5 is a diagram of an interface change of an in-app purchase process in the smartwatch. FIG. 5 shows an interface 51 of a third-party application M. The interface 51 includes props such as a prop 511 and a prop 512. Some props are to-be-paid props, and some other props are paid props or free props. For example, the prop 511 is a to-be-paid prop. After a user taps an icon of the prop 511, the smartwatch may jump to a purchase interface 52. The purchase interface 52 includes prompt information (for example, "coupon commodity 1"), "¥ 3", and a purchase button 521. After the user taps the purchase button 521, the smartwatch may jump to a payment interface 53. The payment interface 53 includes prompt information "In-app purchase" and a payment QR code 531. The user scans the payment QR code 531 by using the smartwatch to complete payment, or scans the payment QR code 531 by using the mobile phone or another device to complete payment. Then, after the payment is completed, the prop 511 is activated, and the user can normally use the prop 511. In this case, the prop 511 is a to-be-paid in-app service.

Therefore, in the foregoing solution in which the mobile phone and the smartwatch independently pay for activating the in-app service, a device side needs to support a network connection, can support an independent application market, and has a capability of storing sensitive information with a high security level. In addition, the device side needs to provide the IAP kit for cross-application communication to support interface communication between the third-party application and the independent application market. That is, a high requirement is imposed on a hardware capability and computing power of the device. Clearly, a device with limited hardware, such as a sports watch, cannot independently complete in-app purchase, and therefore cannot independently activate the in-app service.

It should be noted that the mobile phone and the smartwatch are usually full-range devices with rich hardware resources. However, a device such as a sports watch is usually a lightweight device due to limited hardware resources, and does not support a network connection or an independent application market. Consequently, the device cannot independently complete an in-app purchase activation function.

To overcome the foregoing problem, an embodiment of this application provides an application permission activation method. When a lightweight first device such as a sports watch cannot implement a paid activation function of an ecosystem application, a full-scale second device such as a mobile phone activates an application or an in-app service in the first device in an across-device manner. Specifically, in the method, the second device may obtain a device type of the first device and a service activation status of a first application on the first device based on the deployed distributed communication SDK. If the service activation status is unactivated and the first device is a preset type such as a sports watch, the second device activates the first application or an in-app service by using a second application, for example, completes payment for the first application or the in-app service. The second application is an application that has an association relationship with the first application, for example, an application of a same manufacturer. Further, the second device notifies, based on the distributed communication SDK, the first device that the first application or the corresponding in-app service is already activated, so that the first device normally uses the first application or the in-app service, to implement cross-device application activation. This promotes a more prosperous application ecosystem of an intelligent wearable device, and attracts more developers to develop more ecosystem applications on a device side such as a sports watch.

It may be understood that the first application and the second application may be applications of a same manufacturer. For example, application names of the first application and the second application are the same, or functions of the first application and the second application are the same (that is, services running in the first application and the second application are the same). However, this is not limited thereto. For example, the first application and the second application are respectively a mobile phone version and a watch version of a same application.

The first device provided in embodiments of this application includes but is not limited to the foregoing sports watch, and may alternatively be a band, an Internet of Things (Internet of Things, IoT) device, or the like. In some embodiments, the first device may be a lightweight device, and generally uses a microprocessor with ultra-low power consumption, long standby time, and low costs. In addition, the first device is limited by hardware, and may run a real-time operating system (Real-Time Operating System, RTOS). Usually, the first device does not support a network connection or an independent application market. Consequently, the first device cannot implement activation functions such as a payment function and an in-app purchase function of an ecosystem application.

In some embodiments, the first device may obtain a software package of one or more applications by using another electronic device, to install the one or more applications in the first device. For example, the sports watch may be connected to the mobile phone or a computer in advance, and obtain a software package of one or more applications by using the mobile phone or the computer. However, although a specific application is installed on the first device, the application or an in-app service cannot be independently activated, for example, an activation operation corresponding to a payment function cannot be completed.

The second device provided in embodiments of this application includes but is not limited to the foregoing mobile phone, and may alternatively be another device such as a tablet computer or a notebook computer. In some embodiments, the second device may be a full-range device (or referred to as a heavy-weight device). Usually, the second device has a battery with a large capacity, does not require ultra-low power consumption, and needs to have high performance to ensure user experience. In addition, the second device usually supports a network connection, and supports downloading and activating an application and an in-app service by using an application market or the like.

In some embodiments of this application, the first device and the second device may belong to a same manufacturer. In addition, a device management application is installed on the second device, and is used to manage an application on the first device.

For example, in embodiments of this application, the first device is a sports watch, and the second device is a mobile phone. In addition, a management application such as a sports health application is installed on the mobile phone, and is used to manage installation of an application on the sports watch connected to the mobile phone. It may be understood that, in some embodiments, the sports health application may be used as an application market on the sports watch side.

In embodiments of this application, interaction between a mobile phone 100 and a sports watch 200 is used as an example to describe an application permission activation method provided in this application.

In some embodiments, a distributed communication software development kit (Software Development Kit, SDK) is deployed in both the mobile phone 100 and the sports watch 200, and is middleware for providing a distributed interface to implement distributed communication between the mobile phone 100 and the sports watch 200. The distributed communication SDK may be deployed in software architectures of the mobile phone and the sports watch. In addition, more specifically, the mobile phone 100 and the sports watch 200 perform message transmission through a distributed interface by using a communication technology such as a Bluetooth technology.

In some embodiments, a software system of the mobile phone 100 may use a layered architecture, an event-driven architecture, a microkernel architecture, a microservice architecture, or a cloud architecture. In embodiments of the present invention, an Android system with a layered architecture is used as an example to describe a software structure of the mobile phone 100.

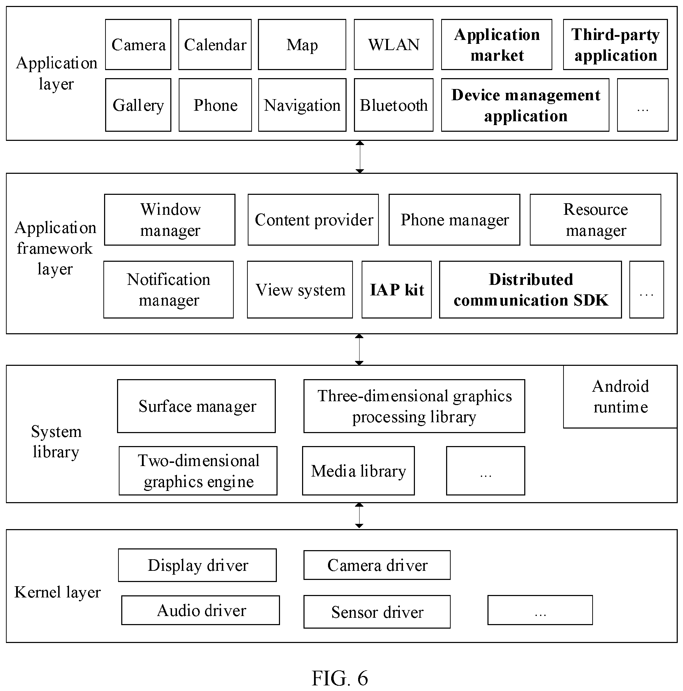

FIG. 6 is a block diagram of the software structure of the mobile phone 100 according to this embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 6, the application package may include applications such as Camera, Gallery, Calendar, Phone, Map, Navigation, WLAN, Bluetooth, Application market, Device management application (such as a Sports health application), and Third-party application (such as a first application, namely, an ecosystem application) of a watch. The application market is used to download a third-party application on the mobile phone side 100 and install the third-party application. The device management application is used to download a third-party application on the watch side 200, namely, a third-party application on the watch side.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, an IAP kit, a distributed communication SDK, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The IAP kit is configured to support cross-application communication between the mobile phone 100 and an application market by using a third-party application on the mobile phone side, to implement an in-app payment function.

The distributed communication SDK is used to transmit information (for example, a service activation status or a device type) about a to-be-activated application or a to-be-activated service in the sports watch 200 to the mobile phone 100, and return information about activating the corresponding application or service by the mobile phone 100 to the sports watch.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports play and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The software system shown in FIG. 6 relates to application presentation (such as gallery and file management) that uses a sharing capability, a directional sharing module that provides a sharing capability, an application framework layer that provides a WLAN service and a Bluetooth service, and a kernel and a bottom layer that provide a WLAN Bluetooth capability and a basic communication protocol.

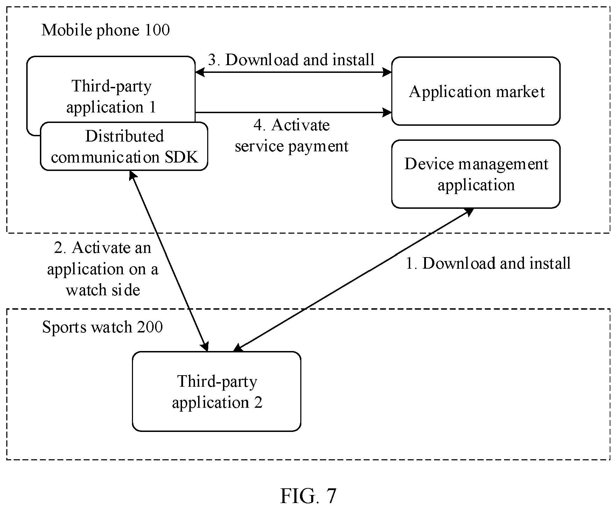

Next, FIG. 7 is a diagram of an application permission activation scenario according to this embodiment of this application.

As shown in FIG. 7, the mobile phone side 100 includes the following applications:
an application market: may download a third-party application on the mobile phone side (denoted as a third-party application 1, namely, a second application) and install the third-party application;
a device management application: may download a third-party application on the sports watch side (denoted as a third-party application 2, namely, a first application) and install the third-party application; and
the third-party application 1: may implement distributed communication with a third-party application on the sports watch side 200 (the third-party application 2) by integrating a distributed communication SDK of a device manufacturer, obtain a device type and an activation status of the third-party application 2 on the sports watch side 200, and help the third-party application 2 on the sports watch side 200 implement service activation by using an application permission activation manner such as download payment or in-app purchase, to grant application permission.

As shown in FIG. 7, the watch side 200 includes the following applications:
the third-party application 2: performs distributed communication with the third-party application 1 on the mobile phone side 100 through an interface of a distributed communication SDK on the sports watch side 200; reports the activation status of the third-party application 1 on the sports watch side 200; and after the third-party application 1 on the mobile phone side 100 completes an activation service such as payment, changes a service activation status of the sports watch side 200, so that a user can normally use a service in the third-party application 2.

It may be understood that the third-party application 1 on the mobile phone side 100 and the third-party application 2 on the sports watch side 200 are applications that have an association relationship, for example, a mobile phone version and a watch version of a same application.

Specifically, in the scenario shown in FIG. 7, the mobile phone 100 may download a watch version of the third-party application (third-party application 2) by using the device management application, connect to the sports watch 200 through Bluetooth, and then send the watch version of the third-party application 2 to the sports watch 200 for installation, that is, implement "1. Download and install" shown in FIG. 7. A mobile phone version of the third-party application 1 on the mobile phone side 100 and the watch version of the third-party application 2 on the sports watch side 200 communicate through the distributed communication SDK to activate the third-party application 2 on the sports watch side 200, that is, implement "2. Activate an application on a watch side" shown in FIG. 7. In addition, the mobile phone side 100 downloads the third-party application 1 by using the application market and installs the third-party application 1, that is, implement "3. Download and install" shown in FIG. 7. Further, the third-party application 1 on the mobile phone side 100 activates a to-be-activated service in the third-party application 1 in an activation manner such as activating service payment by using the application market, that is, implement "4. Activate service payment" shown in FIG. 7.

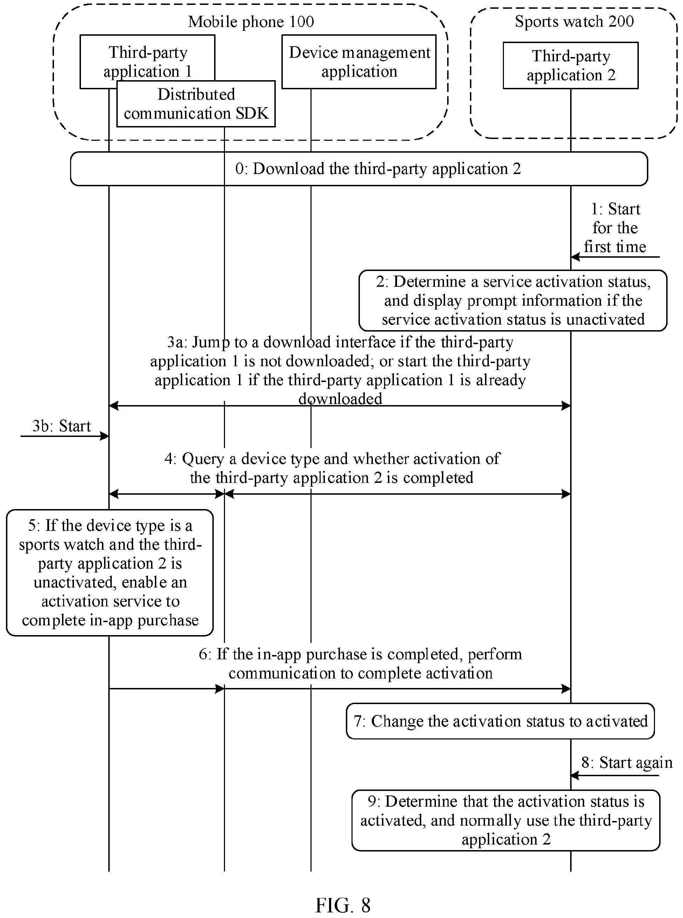

Next, based on the scenario shown in FIG. 7, FIG. 8 is a schematic flowchart of an application permission activation method according to this embodiment of this application. Specifically, in the application permission activation method shown in FIG. 8, a paid activation manner is mainly used as an example to describe a procedure of activating an in-app service in the third-party application 2.

Specifically, the method shown in FIG. 8 includes the following steps.

S0: The mobile phone 100 interacts with the sports watch 200 to download the third-party application 2.

In some embodiments, in S0, the mobile phone 100 downloads the third-party application 2 on the sports watch side 100 free of charge by using the device management application, and sends the third-party application 2 on the sports watch side 200 to the sports watch 200 through Bluetooth, and the sports watch 200 installs the third-party application 2.

In some embodiments, in S0, the mobile phone 100 downloads the third-party application 2 on the sports watch side 100 free of charge, and the sports watch 200 installs the third-party application 2. In addition, the mobile phone 100 may download the third-party application 1 on the mobile phone side free of charge from the application market.

For example, the device management application may be a sports health application, and may manage the connected sports watch 200.

S1: Start the third-party application 2 for the first time.

In some embodiments, the sports watch 200 may install and start the third-party application 2 for the first time, or start the third-party application 2 for the first time after being updated.

S2: Determine a service activation status of the third-party application 2, and display prompt information if the service activation status is unactivated. Therefore, the user is prompted to download the third-party application 1 on the mobile phone side 100 and activate the third-party application 2.

In some embodiments, the service activation status of the third-party application 2 corresponds to permission for the third-party application 2, and the permission for the third-party application 2 can be granted only after the third-party application 2 is already activated. In addition, the service activation status may also be referred to as a permission activation status.

In some embodiments, the service activation status of the third-party application 2 may be an activation status of an overall service in the third-party application 2, that is, the service activation status corresponds to use permission for the overall service in the third-party application 2. In this case, when the service activation status of the third-party application 2 is already activated, it indicates that the permission for the overall service in the third-party application 2 is granted and the overall service can be used; or when the service activation status is unactivated, it indicates that the permission for the overall service in the third-party application 2 is not granted and the overall service cannot be used normally.

In some embodiments, the service activation status of the third-party application 2 may be an activation status of a specific service (denoted as a service 1) in the third-party application 2, that is, the service activation status corresponds to use permission for the service 1. In this case, when the service activation status of the third-party application 2 is already activated, it indicates that the permission for the service 1 in the third-party application 2 is granted and the service 1 can be used; or when the service activation status is unactivated, it indicates that the permission for the service 1 in the third-party application 2 is not granted and the service 1 cannot be used normally.

S3a: The mobile phone 100 jumps to a download interface if the third-party application 1 on the mobile phone side 100 is not downloaded; or the mobile phone 100 starts the third-party application 1 on the mobile phone side 100 if the third-party application 1 on the mobile phone side 100 is already downloaded.

In some embodiments, the third-party application 2 on the sports watch side 200 obtains a message of a distributed interface; and if the sports watch side 200 determines, based on the message of the distributed interface, that the third-party application 1 on the mobile phone side 100 is not downloaded, the sports watch side 200 sends a message to the application market on the mobile phone side 100, so that the mobile phone 100 jumps to the download interface of the third-party application 1 on the mobile phone side 100; or if the third-party application 1 on the mobile phone side 100 is already downloaded, the third-party application 1 on the mobile phone side 100 is directly started, to start an activation procedure.

It may be understood that a distributed interface corresponding to the distributed communication SDK on the mobile phone side 100 is deployed on the sports watch side 200. The third-party application 2 on the sports watch 200 may perform distributed communication with the distributed communication SDK in the mobile phone 100 through the distributed interface, to obtain the message of the distributed interface.

S3b: Start the third-party application 1.

It may be understood that, when the mobile phone side 100 does not download the third-party application 1 currently, the user may manually download or start the third-party application 1.

S4: The mobile phone 100 queries for the device type and whether activation of the third-party application 2 on the sports watch side 200 is completed.

It may be understood that the mobile phone 100 may query for a device type of a currently accessed device, for example, watch information.

S5: If the device type is a sports watch and the third-party application 2 is unactivated, the mobile phone 100 enables an activation service to complete in-app purchase.

In some embodiments, after the third-party application 1 on the mobile phone side 100 is downloaded and started, the third-party application 1 may be used to invoke the interface of the distributed communication SDK, to obtain the device type of the connected sports watch 200 and the activation status of the third-party application 2 on the sports watch side 200. When the device type is a sports watch and the third-party application 2 is in an unactivated state, the mobile phone 100 enables the activation service and completes in-app purchase for the third-party application 2 through the mobile phone 100, to implement closed-loop commercialization of the third-party application 2 on the sports watch side 200.

In some embodiments, for the third-party application 1 that can be downloaded only after payment, the mobile phone 100 first pays for the third-party application 1 in the application market, downloads the third-party application 1, and then starts the third-party application 1, to activate the permission for the third-party application 2 by using the third-party application 1.

In some embodiments, information about a specific device may include a device type, for example, a sports watch or a smartwatch. In this case, when information about the sports watch 200 is a sports watch and the third-party application 2 is unactivated, the mobile phone 100 may start the third-party application 1 to complete activation, to activate a service in the third-party application 2 on the sports watch side 200, so as to obtain use permission for the activated service in the third-party application 2; or when information about the sports watch 200 is smart, the mobile phone 100 does not perform processing, for example, does not need to download the third-party application 1.

In some embodiments, a device type of a specific device may include a lightweight device or a full-range device. In this case, when information about the sports watch 200 is a lightweight device and the third-party application 2 is unactivated, the mobile phone 100 may start the third-party application 1 to complete activation, to activate a service in the third-party application 2 on the sports watch side 200, so as to obtain use permission for the activated service in the third-party application 2; or when information about the sports watch 200 is a full-range device, the mobile phone 100 does not perform processing, for example, does not need to download the third-party application 1.

In some embodiments, the mobile phone 100 may invoke IAP Kit middleware to complete in-app purchase for an in-app service (for example, the service 1) in the third-party application 1.

S6: If the in-app purchase is completed, the mobile phone 100 communicates with the sports watch 200 to complete activation.

It may be understood that the mobile phone 100 may invoke the interface of the distributed communication SDK by using the third-party application 1, to notify the third-party application 2 on the sports watch 200 that activation is completed.

S7: The sports watch 200 changes the service activation status of the third-party application 2 to activated. In addition, the sports watch 200 may give the user a prompt that activation is completed and the application can be used normally. For example, the sports watch 200 may display prompt information "Activation completed, ready to use normally".

S8: The sports watch 200 starts the third-party application 2 again.

S9: The sports watch 200 determines that the service activation status is activated, and normally uses the third-party application 2.

Specifically, the sports watch 200 normally uses a specific in-app service in the third-party application 2 or the overall service in the third-party application 2.

In this way, when the third-party application 1 on the mobile phone side 100 determines, based on the service activation status of the third-party application 2 on the sports watch side 200 and the device type, that the device type is a sports watch and the third-party application 2 is unactivated, the third-party application 1 on the mobile phone side is started to perform in-app purchase, to complete an activation service in the third-party application 2 on the watch side. Therefore, the sports watch can implement paid activation of a service in a third-party application without a need to support an independent application market or a network connection.

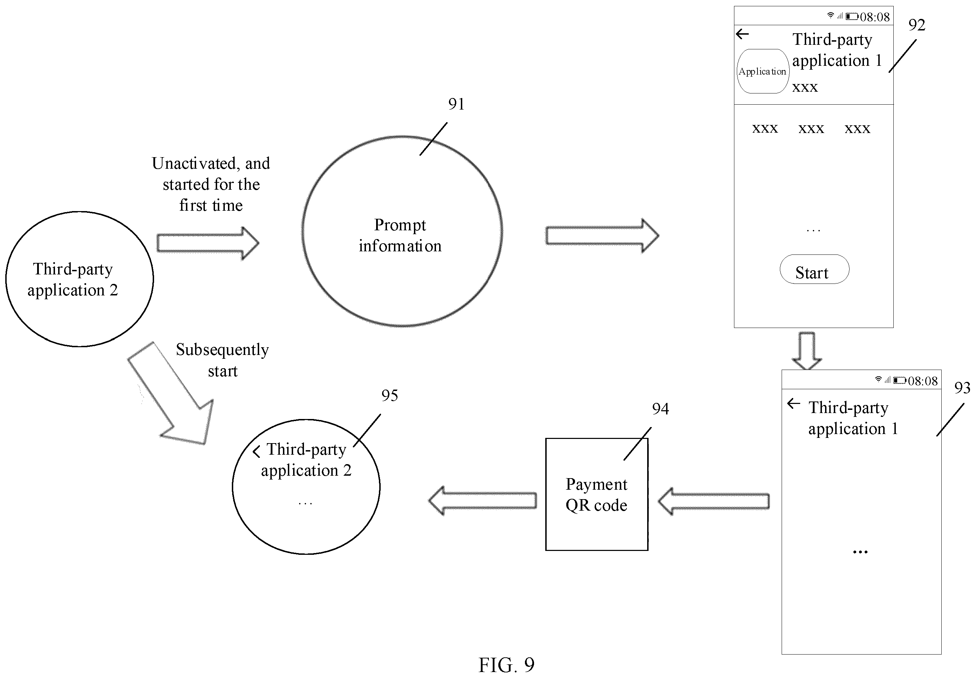

Based on the method shown in FIG. 8, FIG. 9 is a diagram of an application permission activation scenario according to this embodiment of this application. In the scenario shown in FIG. 9, an example in which the device management application is a sports health application, the third-party application 1 on the mobile phone side 100 is a third-party application 1, and the third-party application 2 on the sports watch side 200 is a third-party application 2 having an association relationship is used to describe a solution in which the user manually operates the mobile phone 100 to start the application market to download the third-party application 1 on the mobile phone side 100.

As shown in FIG. 9, the third-party application 2 on the sports watch side 200 is unactivated; and when the third-party application 2 is started for the first time, the user is prompted, and the sports watch 200 displays a prompt interface 91 including prompt information, for example, "Tap to download/or start an application on a mobile phone side for activation". Then, the mobile phone 100 jumps to a download interface 92 of the application market on the mobile phone 100 based on an installation status of the third-party application 1 on the mobile phone side 100, to download the third-party application 1 on the mobile phone side 100, so as to start the third-party application 1 on the mobile phone side 100 and display an interface 93 of the third-party application 1 on the mobile phone 100. If the mobile phone side 100 determines that the device type of the connected sports watch 200 is a sports watch and the third-party application 2 on the watch side is unactivated, the mobile phone side 100 starts activation service payment, and then performs payment by using a payment QR code 94. After the payment succeeds, the third-party application 2 on the sports watch side 200 is activated, and the service activation status of the third-party application 2 on the watch side is changed. Subsequently, when the sports watch 200 starts the third-party application 2 on the watch side again, the sports watch 200 can normally display a running interface 95 of the third-party application 2 on the watch side and has permission for normally using the third-party application 2.

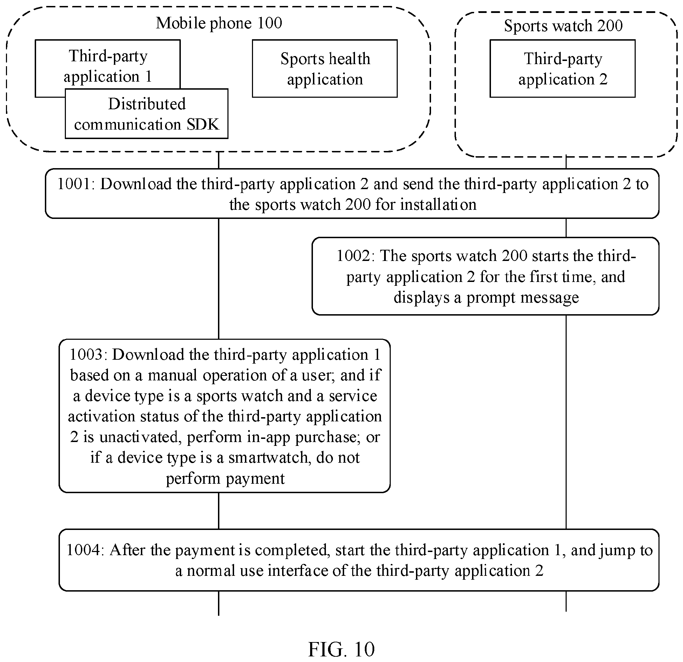

The following describes, with reference to FIG. 10, a specific procedure of the application permission activation method in the scenario shown in FIG. 9. Specifically, the method shown in FIG. 10 includes the following steps.

S1001: The mobile phone 100 downloads the third-party application 2 and sends the third-party application 2 to the watch 200 for installation.

The mobile phone 100 may download the third-party application 2 on the watch side by using the sports health application, and send the third-party application 2 to the sports watch 200 through Bluetooth for installation.

S1002: The sports watch 200 starts the third-party application 2 on the watch side for the first time, and displays a prompt message, to remind the user to download/start the third-party application on the mobile phone side.

In this case, the service activation status of the third-party application on the watch side in the sports watch 200 is unactivated.

In some embodiments, the sports watch 200 may display the prompt interface 91 shown in FIG. 9.

S1003: The mobile phone 100 downloads the third-party application 1 based on a manual operation of the user; and if the device type is a sports watch and the service activation status of the third-party application 2 is unactivated, the mobile phone 100 invokes the IAP kit to perform in-app purchase; or if the device type is a smartwatch, the mobile phone 100 does not perform payment.

The mobile phone 100 downloads the third-party application 1 on the mobile phone side based on the manual operation of the user by using the application market.

It may be understood that the mobile phone 100 may obtain the service activation status of the third-party application 2 on the watch side in the sports watch 200 and the device type of the sports watch 200 through the interface of the distributed communication SDK.

In some embodiments, the mobile phone 100 may send a device query message to the sports watch 200 through the interface of the distributed communication SDK, to obtain the device type of the sports watch 20 and the service activation status of the third-party application 2. Further, the sports watch 200 sends a device reporting message to the mobile phone 100 through the distributed interface. The device reporting message includes the device type of the sports watch 20 and the service activation status of the third-party application 2.

In some embodiments, when the sports watch 200 starts the third-party application 2 on the watch side for the first time and the third-party application 2 is unactivated, the sports watch 200 may actively report the device reporting message to the mobile phone 100 by using the distributed communication SDK.

In some embodiments, the mobile phone 100 may obtain, through the interface of the distributed communication SDK, the device reporting message sent by the sports watch 200, and determine whether the device type of the sports watch 20 is a sports watch and whether the service activation status of the third-party application 2 is unactivated.

In some other embodiments, if the third-party application 1 on the mobile phone side needs to be paid before being downloaded, in S1003, the mobile phone 100 may first pay for the third-party application 1 on the mobile phone side by using the application market and then download the third-party application 1, so as to activate the third-party application 2 through the mobile phone side 100.

S1004: After the payment is completed, the mobile phone 100 starts the third-party application 1 on the mobile phone side, and the watch side on the sports watch side 200 jumps to a normal use interface of the third-party application 2.

It may be understood that the mobile phone side 100 may notify, through the interface of the distributed communication SDK, the third-party application 2 on the sports watch 200 that activation is completed and the third-party application 2 can be used normally.

In this way, in the scenario in which the third-party application 2 on the sports watch 200 needs to be activated, the sports watch 200 can provide the prompt information to indicate the user to manually download the third-party application 2 on the mobile phone side from the mobile phone 100, so as to implement a subsequent cross-device application activation procedure.

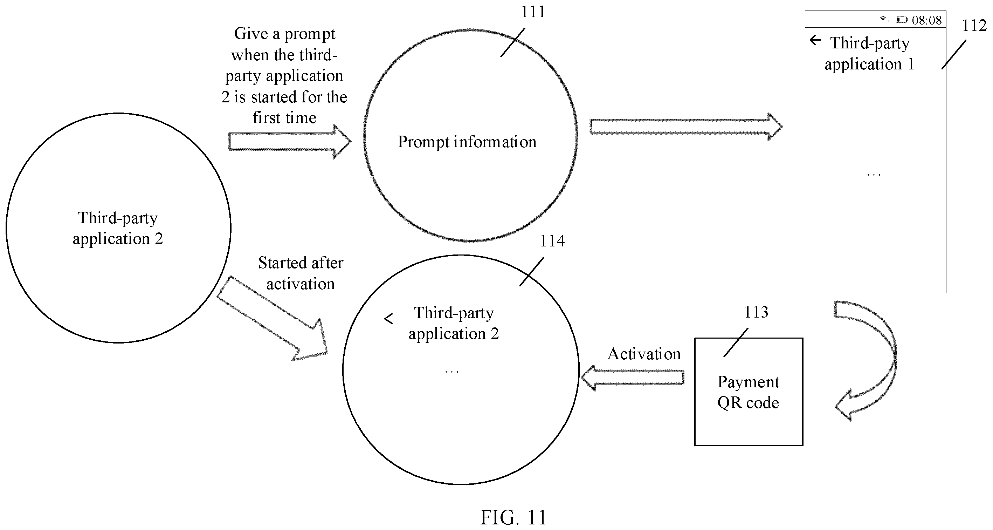

Based on the method shown in FIG. 8, FIG. 11 is a diagram of an application permission activation scenario according to this embodiment of this application. The scenario shown in FIG. 11 is described by using a solution in which the device management application is a sports health application, and the mobile phone 100 automatically jumps to the download interface of the third-party application 1 in the application market, or automatically starts the third-party application 1 on the mobile phone side 100.

As shown in FIG. 11, the third-party application 2 on the sports watch side 200 is unactivated; and when the third-party application 2 is started for the first time, the user is prompted, and the sports watch 200 displays a prompt interface 111 including prompt information "Tap to download/or start an application on a mobile phone side for activation". Then, the mobile phone 100 jumps to an interface 112 of the third-party application 1 on the mobile phone side 100 based on an installation status of the third-party application 1 on the mobile phone side 100, that is, the third-party application 1 on the mobile phone side is already installed on the mobile phone 10. If the mobile phone side 100 determines that a type of a connected device is a sports watch and the third-party application 2 on the watch side is unactivated, the mobile phone side 100 starts activation service payment, and then performs payment by using a payment QR code 113. After the payment succeeds, the third-party application 2 on the sports watch side 200 is activated, and the service activation status of the third-party application 2 on the watch side is changed. Subsequently, when the sports watch 200 starts the third-party application 2 on the watch side again, the sports watch 200 can normally display an interface 114 of the third-party application 2 on the watch side and has permission for normally using the third-party application 2.

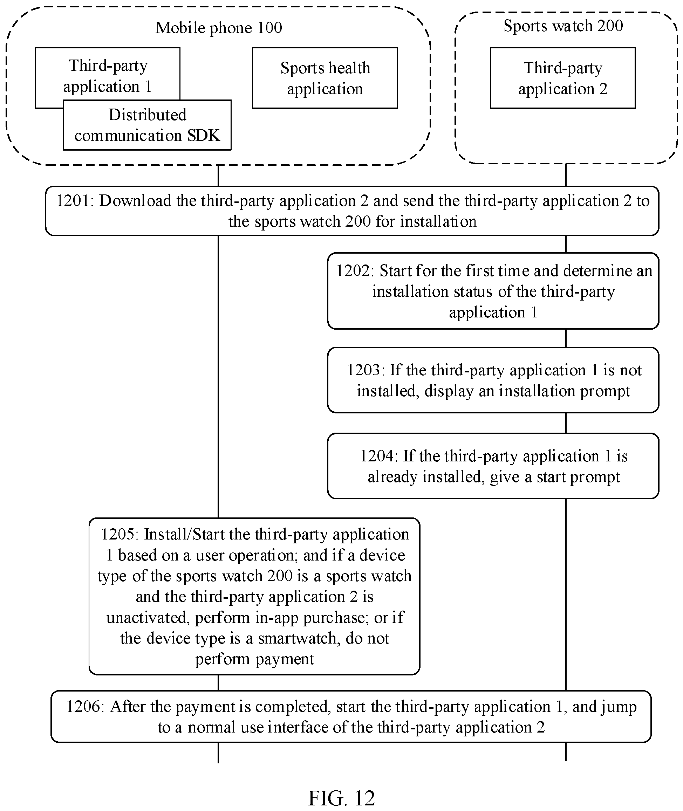

The following describes, with reference to FIG. 12, a specific procedure of the application permission activation method in the scenario shown in FIG. 11. Specifically, the method shown in FIG. 12 includes the following steps.

S1201: The mobile phone 100 downloads the third-party application 2 and sends the third-party application 2 to the sports watch 200 for installation.

The mobile phone 100 may download the third-party application 2 by using the sports health application, and send the third-party application 2 on the sports watch side to the sports watch 200 through Bluetooth for installation.

S1202: The sports watch 200 starts the third-party application 2 on the watch side for the first time, and determines the installation status of the third-party application 1 on the mobile phone side through the distributed interface.

In some embodiments, the sports watch 200 may send an installation query message to the interface of the distributed communication interface SDK in the mobile phone 100 through the distributed interface, to request to query for the installation status of the third-party application on the mobile phone 100. Then, the sports watch 200 receives an installation response message returned by the mobile phone 100 through the interface of the distributed communication interface SDK, where the installation response message indicates whether a corresponding third-party application on the mobile phone side is installed on the mobile phone 100.

S1203: If the third-party application 1 on the mobile phone side is not installed, the sports watch 100 displays an installation prompt, for example, prompts the user by displaying prompt information: Tap to download an application on a mobile phone side to activate a third-party application on a watch side.

In some embodiments, the sports watch 200 may send a download jump message to the interface of the distributed communication interface SDK in the mobile phone 100 through the distributed interface, to request the mobile phone 100 to open the download interface of the third-party application 1 on the mobile phone side in the application market, where the download jump message includes an ID (for example, a name) of the third-party application 1. In this case, the mobile phone 100 may automatically jump to the download interface of the third-party application 1 on the mobile phone side in the application market based on the download jump message. Then, the user may tap a control such as a "Download" control on the download interface to trigger the mobile phone 100 to start downloading the third-party application 1 on the mobile phone side.

S1204: If the third-party application 1 on the mobile phone side is already installed, the sports watch 20 gives a start prompt, for example, gives the following prompt to the user: Tap to start the third-party application 1 on the mobile phone side for activation. The user taps on the mobile phone 100 to start the third-party application 1 on the mobile phone side, and the mobile phone 100 jumps to start the third-party application 1 on the mobile phone.

In some embodiments, the sports watch 200 may send a start jump message to the distributed communication interface SDK in the mobile phone 100 through the distributed interface, to request the mobile phone 100 to start the third-party application 1 on the mobile phone side, where the start jump message includes an ID (for example, a name) of the third-party application 1. In this case, the mobile phone 100 may start the third-party application 1 based on the start jump message to automatically jump to an interface of the third-party application 1.

S1205: The mobile phone 100 installs/starts the third-party application 1 on the mobile phone side based on a user operation; and if the device type of the sports watch 200 is a sports watch and the third-party application 2 is unactivated, the mobile phone 100 invokes the IAP kit to perform in-app purchase; or if the device type is a smartwatch, the mobile phone 100 does not perform payment.

S1206: The mobile phone 100 downloads the third-party application 1 on the mobile phone side based on a user operation, and then starts the third-party application 1, and the sports watch 200 jumps to a normal use interface of the third-party application 2.

It may be understood that the mobile phone side 100 may send an activation complete message through the interface of the distributed communication SDK, to notify the third-party application 2 on the sports watch 200 that activation is completed and the third-party application 2 can be used normally.

In this way, in the scenario in which the third-party application 2 on the sports watch 200 needs to be activated, the sports watch 200 triggers the mobile phone 100 to automatically open the download interface of the third-party application 1 on the mobile phone side or automatically open a running interface of the third-party application 1 on the mobile phone side, so as to facilitate execution of a subsequent procedure of activating the third-party application 2 across devices.

The following describes in detail the application permission activation method provided in embodiments of this application, without being limited to the payment activation manner or another activation manner.

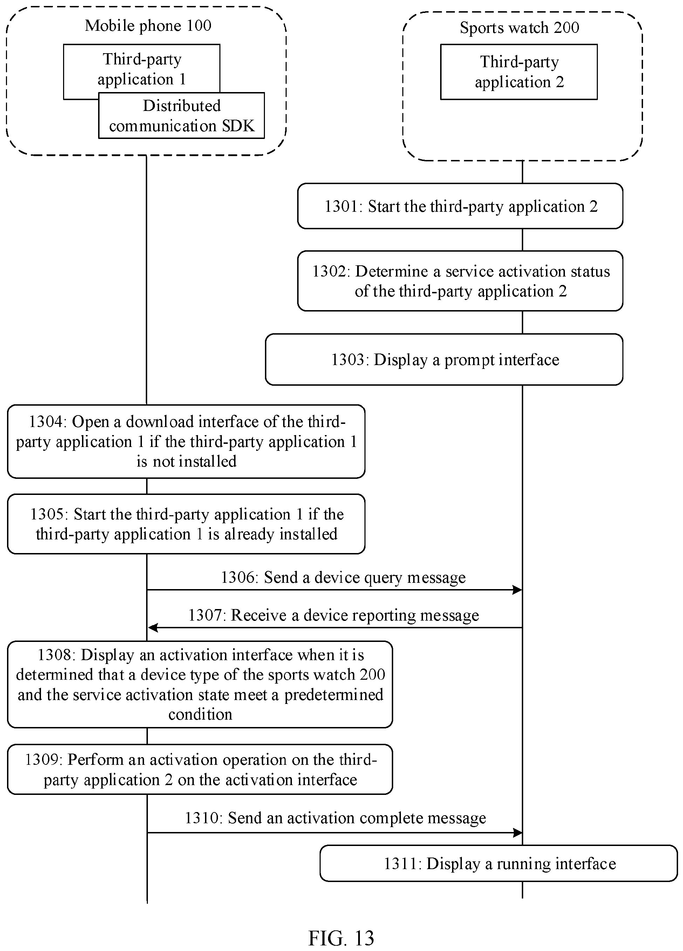

FIG. 13 shows an application permission activation method according to this embodiment of this application. The method includes the following steps.

S1301: The sports watch 200 starts a third-party application 2.

For example, a user taps an icon of the third-party application 2 on an interface of the sports watch 200, to trigger the sports watch 200 to start the third-party application 2. Usually, the third-party application 2 is started on the sports mobile phone 100 for the first time.

In some embodiments, the sports watch 200 may obtain the third-party application 2 from the mobile phone side 100 in advance, and the mobile phone 100 downloads the third-party application 2 by using a sports health application, and then sends the third-party application 2 to the sports watch 200.

S1302: The sports watch 200 determines a service activation status of the third-party application 2.

The service activation status may be a permission activation status of an overall service in the third-party application 2 or a permission activation status of an in-app service in the third-party application 2, for example, a service 1.

In some embodiments, the sports watch 200 may record the service activation status of the third-party application 2, and update information about the service activation status in time when the service activation status changes.

If the third-party application 2 is unactivated, S1303 is performed. If the third-party application 2 is already activated, the sports watch 200 continues to display an interface of the third-party application 2 and normally uses the third-party application 2.

S1303: The sports watch 200 displays a prompt interface, where the prompt interface is used to prompt the user to start or download a third-party application 1 on the mobile phone 100.

For example, the prompt interface displayed by the sports watch 200 may be the prompt interface 91 in FIG. 9 or the prompt interface 111 in FIG. 11.

S1304: The mobile phone 100 opens a download interface of the third-party application 1 on the mobile phone side in the application market if the third-party application 1 is not installed on the mobile phone 100.

In some embodiments, before S1306, the sports watch 200 sends an installation query message to the mobile phone 100 through the distributed interface, to request to query for an installation status of the third-party application 1 on the mobile phone 100. Further, the sports watch 200 receives an installation response message from the mobile phone 100. The mobile phone 100 may return the installation response message through the distributed communication interface SDK, where the installation response message indicates whether the corresponding third-party application 1 on the mobile phone side is installed on the mobile phone 100. In this way, in S1306, if the third-party application 1 is not installed on the mobile phone 100, the sports watch 200 sends a download jump message to the mobile phone 100, to indicate the mobile phone 100 to automatically open the download interface of the third-party application 1 on the mobile phone side in the application market. The download jump message includes an ID (for example, a name) of the third-party application 1. In this case, the mobile phone 100 may automatically jump to the download interface of the third-party application 1 on the mobile phone side in the application market based on the download jump message. Then, the user may tap a control such as a "Download" control on the download interface to trigger the mobile phone 100 to start downloading the third-party application 1 on the mobile phone side.

In some other embodiments, the sports watch 200 may display prompt information to prompt the user to manually download or start the third-party application 1.

In some other embodiments, the sports watch 200 may display a two-dimensional code corresponding to an interface for downloading the third-party application on the mobile phone side, and the mobile phone 100 may scan the two-dimensional code to open the download interface. After scanning the two-dimensional code, the mobile phone 100 may also determine whether the application is installed. If the application is installed, the mobile phone 100 may start a corresponding third-party application.

S1305: The mobile phone 100 starts the third-party application 1 if the third-party application 1 is already installed on the mobile phone 100.

It may be understood that the mobile phone 100 may automatically start or manually start the third-party application 1.

S1306: The third-party application 1 on the mobile phone 100 sends a device query message to the third-party application 2 on the sports watch 200, to request to obtain a device type of the sports watch 20 and the service activation status of the third-party application 2.

S1307: The third-party application 1 on the mobile phone 100 receives a device reporting message from the third-party application 2 on the sports watch 200, where the device reporting message includes the device type of the sports watch 20 and the service activation status of the third-party application 2.

S1308: The mobile phone 100 displays an activation interface when the third-party application 1 on the mobile phone 100 determines that the device type of the sports watch 200 and the service activation status meet a predetermined condition, where the activation interface is used to activate application permission.

The predetermined condition may include that the device type is a lightweight device such as a sports watch and the service activation status of the third-party application 2 is unactivated.

In some embodiments, the mobile phone 100 may activate the third-party application 1 in an activation manner such as an application payment activation manner (for example, in-app purchase) or a face authentication manner. The activation interface is an interface of any application activation manner.

In some other embodiments, after the mobile phone 100 is connected to the sports watch 200, the mobile phone 100 stores the device type of the sports watch 200. Therefore, the mobile phone 100 performs information interaction with the sports watch 200 by using the distributed communication SDK to determine a service activation status of a third-party application on the sports watch side 200. The mobile phone determines, based on the device type of the sports watch 200 that is stored in the mobile phone and information about the service activation status that is obtained from the sports watch 200, whether application activation needs to be performed on the mobile phone side 100.

S1309: The mobile phone 100 performs an activation operation on the third-party application 2 on the activation interface.

For example, when the activation interface is a payment interface, the user needs to perform a payment operation such as inputting a payment password to complete the activation operation.

For example, when the activation interface is a face authentication interface, the user needs to capture a facial image according to a prompt to complete the activation operation.

It may be understood that the third-party application 1 and the third-party application 2 are different versions of a same application, and activating the third-party application 1 means that activating the third-party application 2.

S1310: The mobile phone 100 sends an activation complete message to the sports watch 200, where the activation complete message indicates that application permission for the third-party application 2 is already activated.

In some embodiments, the sports watch 200 may update the information about the service activation status based on the received activation complete message.

S1311: The sports watch 200 displays a running interface, where the running interface is a normal running interface of the third-party application 2.

In some embodiments, the sports watch 200 queries recorded information about the service activation status in real time, to determine that a current service activation status of the third-party application is activated, that is, permission for the third-party application 2 is already activated, so that a display interface is updated to a normal running interface of the third-party application, to normally use the third-party application 2.

In some other embodiments, the sports watch 200 may re-start the third-party application 2, and determine that a current service activation status of the third-party application is activated, that is, permission for the third-party application 2 is already activated, so that a display interface is a normal running interface of the third-party application, to normally use the third-party application 2.

In this way, according to the application permission activation method provided in this embodiment of this application, a lightweight device such as a sports watch does not need to be connected to a network or support an independent application market, and a same application may be activated by using a full-range device such as a mobile phone, so that the mobile phone notifies, by using a distributed communication SDK, the sports watch that the application is already activated, to implementing cross-device application activation.

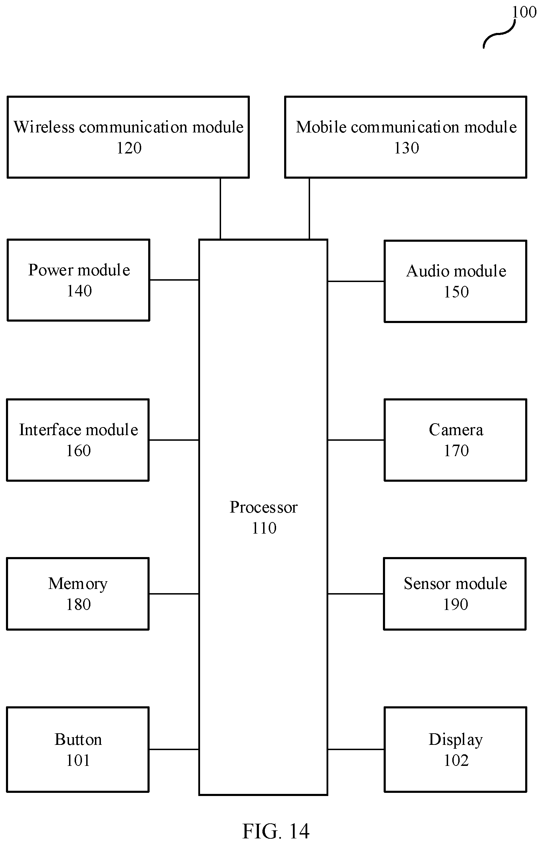

FIG. 14 is a diagram of a hardware structure of the mobile phone 100.

The mobile phone 100 may include a processor 110, a power module 140, a memory 180, a mobile communication module 130, a wireless communication module 120, a sensor module 190, an audio module 150, a camera 170, an interface module 160, a button 101, a display 102, and the like.

It may be understood that the structure shown in this embodiment of the present invention does not constitute a specific limitation on the mobile phone 100. In some other embodiments of this application, the mobile phone 100 may include more or fewer components than those shown in the figure, or a combination of some components, or splits from some components, or a different component layout. The components shown in the figure may be implemented by hardware, software, or a combination of software and hardware.

The processor 110 may include one or more processing units, for example, may include a processing module or processing circuit of a central processing unit CPU (Central Processing Unit), an image processing unit GPU (Graphics Processing Unit), a digital signal processor DSP, a micro-programmed control unit MCU (Micro-programmed Control Unit), an AI (Artificial Intelligence, artificial intelligence) processor, a programmable logic device FPGA (Field Programmable Gate Array), or the like. Different processing units may be independent components, or may be integrated into one or more processors. A storage unit may be disposed in the processor 110, and is configured to store instructions and data. In some embodiments, the storage unit in the processor 110 is a cache memory 180. For example, the processor 110 is configured to determine whether a device type of the sports watch 200 connected to the mobile phone 100 and a service activation status of the third-party application 2 on the sports watch 200 meet a predetermined condition.

The power module 140 may include a power supply, a power management component, and the like. The power supply may be a battery. The power management component is configured to manage charging of the power supply and power supply of the power supply to another module. In some embodiments, the power management component includes a charging management module and a power management module. The charging management module is configured to receive a charging input from a charger. The power management module is configured to connect to the power supply, the charging management module, and the processor 110. The power management module receives an input from the power supply and/or the charging management module, and supplies power to the processor 110, the display 102, the camera 170, the wireless communication module 120, and the like.

The mobile communication module 130 may include but is not limited to an antenna, a power amplifier, a filter, an LNA (Low noise amplify, low noise amplifier), and the like. The mobile communication module 130 may provide a wireless communication solution that is applied to the mobile phone 100 and that includes 2G/3G/4G/5G or the like. The mobile communication module 130 may receive an electromagnetic wave through the antenna, perform processing such as filtering or amplification on the received electromagnetic wave, and transfer the electromagnetic wave to a modem processor for demodulation. The mobile communication module 130 may further amplify a signal modulated by the modem processor, and convert the signal into an electromagnetic wave for radiation through the antenna. In some embodiments, at least some functional modules of the mobile communication module 130 may be disposed in the processor 110. In some embodiments, at least some functional modules of the mobile communication module 130 and at least some modules of the processor 110 may be disposed in a same component. A wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), Bluetooth (Bluetooth, BT), global navigation satellite system (global navigation satellite system, GNSS), a wireless local area network (wireless local area network, WLAN), a near field communication (near field communication, NFC) technology, frequency modulation (frequency modulation, FM) and/or field communication (infrared, IR), an infrared (infrared, IR) technology, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The wireless communication module 120 may include an antenna, and receive/send an electromagnetic wave through the antenna. The wireless communication module 120 may provide a wireless communication solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone 100 may communicate with a network and another device by using the wireless communication technology.

In some embodiments, the mobile communication module 130 and the wireless communication module 120 that are of the mobile phone 100 may alternatively be located in a same module.

The display 102 is configured to display a man-machine interaction interface, an image, a video, and the like. The display 102 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. For example, the display 102 may display a setting interface, an access interface, and the like of a file protected by the DRM copyright.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or convert an analog audio input into a digital audio signal. The audio module 150 may be further configured to: encode and decode an audio signal. In some embodiments, the audio module 150 may be disposed in the processor 110, or some functional modules in the audio module 150 are disposed in the processor 110. In some embodiments, the audio module 150 may include a speaker, an earpiece, a microphone, and a headset jack.

The camera 170 is configured to capture a static image or a video. An optical image of an object is generated through the lens, and is projected onto a photosensitive element. The photosensitive element converts an optical signal into an electrical signal, and then transfers the electrical signal to an ISP (Image Signal Processor, image signal processor) to convert the electrical signal into a digital image signal. The mobile phone 100 may implement an image shooting function by using the ISP, the camera 170, a video codec, the GPU (Graphics Processing Unit, graphics processing unit), the display 102, an application processor, and the like.

The interface module 160 includes an external memory interface, a universal serial bus (universal serial bus, USB) interface, a subscriber identity module (subscriber identification module, SIM) card interface, and the like. The external memory interface may be used to connect to an external memory card, for example, a micro SD card, to expand a storage capability of the mobile phone 100. The external memory card communicates with the processor 110 through the external memory interface, to implement a data storage function. The universal serial bus interface is used for communication between the mobile phone 100 and another electronic device. The subscriber identity module card interface is used to communicate with a SIM card installed in the mobile phone 10010, for example, read a phone number stored in the SIM card, or write a phone number into the SIM card.

In some embodiments, the mobile phone 100 further includes a button 101, a motor, an indicator, and the like. The button 101 may include a volume button, an on/off button, and the like. The motor is configured to enable the mobile phone 100 to generate a vibration effect, for example, generate vibration when the mobile phone 100 of the user is called, to prompt the user to answer an incoming call of the mobile phone 100. The indicator may include a laser indicator, a radio frequency indicator, an LED indicator, and the like.

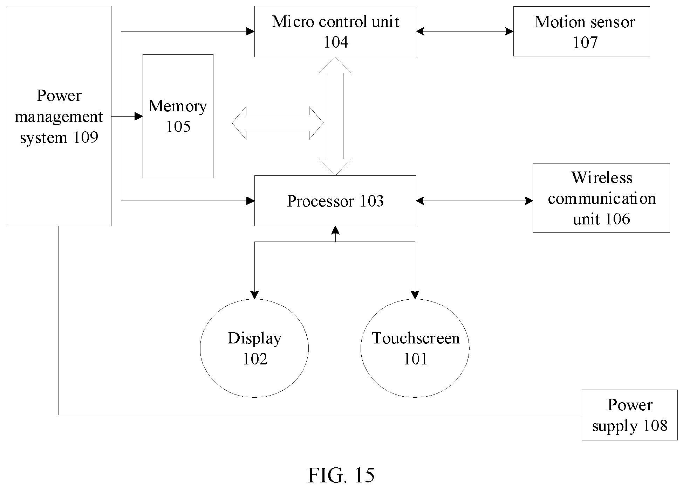

FIG. 15 is a diagram of a hardware structure of the sports watch 200 according to this embodiment of this application. The smartwatch may include a watch body. In an embodiment of this application, a body of the sports watch 200 may include a touchscreen 101 (also referred to as a touch panel), a display 102, a housing (the housing includes a front housing (not shown in FIG. 15) and a bottom housing (not shown in FIG. 15)), a processor 103, a micro control unit (micro control unit, MCU) 104, a memory 105, a wireless communication unit 106, a motion sensor 107, a power supply 108, a power management system 109, and the like.

The following describes each functional component of the smartwatch 200.

The touchscreen 101 may also be referred to as a touch panel, and may collect a touch operation performed by a watch user on the touchscreen 101. For example, the touchscreen 101 may be configured to collect a tap gesture or a double-tap gesture of the user on the touchscreen 101.

The display 102 may be configured to display information input by the user or prompt information provided for the user and various menus on the watch. Further, the touchscreen 101 can cover the display 102. When detecting a touch operation on or near the touchscreen 101, the touchscreen 101 transfers the touch operation to the processor 103 to determine a type of a touch event. Then, the processor 103 provides a corresponding visual output on the display 102 based on the type of the touch event. For example, in some embodiments of this application, the sports watch 200 may display an audio playing interface, or an interface for controlling playing of an audio device.

The processor 103 is configured to: perform system scheduling, control the touchscreen 101 and the display 102, support processing of the wireless communication unit 106, and so on. The micro control unit 104 is configured to: control a sensor, perform calculation on data of the sensor, communicate with the processor 103, and so on. The sensor may include the motion sensor 107 or another sensor.

The memory 105 is configured to store a software program and various data (for example, various detection data of the sports watch 200, for example, information about an activation status of a third-party application, and a device type). The processor 103 executes various functional applications and data processing of the sports watch 200 by running the software program and the data that are stored in the memory 105.

The wireless communication unit 106 implements wireless communication between the sports watch 200 and another electronic device (such as a mobile phone or a tablet computer) by using the wireless communication unit 106, for example, may include wireless communication solutions such as Bluetooth (Bluetooth, BT), a near field communication (near field communication, NFC) technology, and an infrared (infrared, IR) technology. For example, in embodiments of this application, the sports watch 200 may establish a communication connection to the mobile phone 100 through Bluetooth.

The power management system 109 is configured to connect to the power supply 108, and supply power to the touchscreen 101, the display 102, the processor 103, the micro control unit 104, the memory 105, the wireless communication unit 106, the motion sensor 107, and the like.

It can be understood that the structure shown in FIG. 15 is merely a specific structure for implementing a function of the sports watch 200 in the technical solutions of this application, and a sports watch 200 having another structure and capable of achieving a similar function is also applicable to the technical solutions of this application, which is not limited herein.

Embodiments of a mechanism disclosed in this application may be implemented in hardware, software, firmware, or a combination of these implementation methods. Embodiments of this application may be implemented as a computer program or program code executed on a programmable system. The programmable system includes at least one processor, a storage system (including a volatile and nonvolatile memory and/or a memory element), at least one input device, and at least one output device.

The program code may be used to input instructions, to perform functions described in this application and generate output information. The output information may be used in one or more output devices in a known manner. For a purpose of this application, a processing system includes any system with a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code can also be implemented in an assembly language or a machine language when needed. Actually, the mechanism described in this application is not limited to a scope of any particular programming language. In either case, the language may be a compiled language or an interpreted language.

In some cases, the disclosed embodiments may be implemented by hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (for example, a computer) readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that, in the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. An application permission activation method, wherein the method comprises:
in response to an operation of starting a first application installed on a first device, determining, by the first device, a permission activation status of the first application;
when the permission activation status is unactivated, sending, by the first device, a first message to a second device, wherein the first message comprises a device type of the first device and the permission activation status of the first application;
when determining that the device type is a preset type and the permission activation status is unactivated, starting, by the second device, a second application on the second device, wherein the second application has an association relationship with the first application;
activating, by the second device, permission for the first application by using the second application; and
sending, by the second device, a second message to the first device, wherein the second message indicates that the permission for the first application is already activated.

2. The method according to claim 1, wherein the method further comprises:
if the permission activation status is unactivated, displaying, by the first device, a first application interface, wherein the first application interface is used to prompt a user to download or start the second application on the second device.

3. The method according to claim 1, wherein the method further comprises:
sending, by the second device, a third message to the first device when starting the second application, wherein the third message is used to obtain the device type of the first device and the permission activation status of the first application.

4. The method according to claim 1, wherein the method further comprises:
displaying, by the second device, a second application interface when determining that the device type is the preset type and the permission activation status is unactivated, wherein the second application interface is used to activate the permission for the first application.

5. The method according to claim 1, wherein the preset type is a lightweight device.

6. The method according to any one of claims 1 to 5, wherein the method further comprises:
sending, by the first device, a fourth message to the second device, wherein the fourth message is used to obtain an installation status of the second application on the second device; and
if the installation status is uninstalled, sending, by the first device, a fifth message to the second device, wherein the fifth message indicates the first device to automatically open a download interface of the second application; or
if the installation status is installed, sending, by the first device, a sixth message to the second device, wherein the sixth message indicates the first device to automatically start the second application.

7. The method according to claim 1, wherein the method further comprises:
displaying, by the first device, a third application interface based on the second message, wherein the third application interface is a normal running interface of the first application.

8. The method according to claim 1, wherein the method further comprises:
changing, by the first device, the permission activation status of the first application to activated based on the second message.

9. The method according to claim 1, wherein the permission for the first application is use permission for an overall service in the first application or use permission for a service in the first application.

10. The method according to claim 1, wherein an activation manner of the first application comprises at least one of the following: a payment activation manner, a face authentication manner, a fingerprint authentication manner, and a character password authentication manner.

11. The method according to claim 1, wherein when an activation manner of the first application is a payment activation manner, the second device uses the second application to invoke an application market to perform in-app purchase, to activate the permission for the first application.

12. The method according to claim 1, wherein a first distributed communication SDK is deployed in the first device, a second distributed communication SDK is deployed in the second device, and message transmission between the first device and the second device is performed based on the first distributed communication SDK and the second distributed communication SDK.

13. The method according to claim 12, wherein the first message is sent by the first device to an interface of the second distributed communication SDK by invoking an interface of the first distributed communication SDK by using the first application, and the first message is transmitted to the second application through the interface of the second distributed communication SDK; and
the second message is sent by the second device to the interface of the first distributed communication SDK by invoking the interface of the second distributed communication SDK by using the second application, and the second message is transmitted to the first application through the interface of the first distributed communication SDK.

14. An application permission activation method, applied to a first device, wherein the method comprises:
in response to an operation of starting a first application installed on the first device, determining, by the first device, a permission activation status of the first application;
when the permission activation status is unactivated, sending, by the first device, a first message to a second device, wherein the first message comprises a device type of the first device and the permission activation status of the first application; and
receiving, by the first device, a second message from the second device, wherein the second message indicates that permission for the first application is already activated, the permission for the first application is activated by the second device by using a second application when the second device determines that the device type is a preset type and the permission activation status is unactivated, and the second application has an association relationship with the first application.

15. The method according to claim 14, wherein the method further comprises:
if the permission activation status is unactivated, displaying, by the first device, a first application interface, wherein the first application interface is used to prompt a user to download or start the second application on the second device.

16. The method according to claim 14, wherein the preset type is a lightweight device.

17. The method according to any one of claims 14 to 16, wherein the method further comprises:
sending, by the first device, a fourth message to the second device, wherein the fourth message is used to obtain an installation status of the second application installed on the second device; and
if the installation status is uninstalled, sending, by the first device, a fifth message to the second device, wherein the fifth message indicates the second device to automatically open a download interface of the second application; or
if the installation status is installed, sending, by the first device, a sixth message to the second device, wherein the sixth message indicates the second device to automatically start the second application.

18. The method according to any one of claims 14 to 17, wherein the method further comprises:
displaying, by the first device, a third application interface based on the second message, wherein the third application interface is a normal running interface of the first application.

19. The method according to claim 14, wherein the method further comprises:
changing, by the first device, the permission activation status of the first application to activated based on the second message.

20. The method according to claim 14, wherein the permission for the first application is use permission for an overall service in the first application or use permission for a service in the first application.

21. The method according to claim 14, wherein an activation manner of the first application comprises at least one of the following: a payment activation manner, a face authentication manner, a fingerprint authentication manner, and a character password authentication manner.

22. The method according to claim 14, wherein a first distributed communication SDK is deployed in the first device, a second distributed communication SDK is deployed in the second device, and message transmission between the first device and the second device is performed based on the first distributed communication SDK and the second distributed communication SDK.

23. The method according to claim 22, wherein the first message is sent by the first device to an interface of the second distributed communication SDK by invoking an interface of the first distributed communication SDK by using the first application, and the first message is transmitted to the second application through the interface of the second distributed communication SDK; and
the second message is sent by the second device to the interface of the first distributed communication SDK by invoking the interface of the second distributed communication SDK by using the second application, and the second message is transmitted to the first application through the interface of the first distributed communication SDK.

24. An application permission activation method, applied to a second device, wherein the method comprises:
receiving, by the second device, a first message from a first device, wherein the first message comprises a device type of the first device and a permission activation status of a first application installed on the first device;
when determining that the device type is a preset type and the permission activation status is unactivated, starting, by the second device, a second application on the second device, wherein the second application has an association relationship with the first application;
activating, by the second device, permission for the first application by using the second application; and
sending, by the second device, a second message to the first device, wherein the second message indicates that the permission for the first application is already activated.

25. The method according to claim 24, wherein the method further comprises:
sending, by the second application, a third message to the first device when the second device starts the second application, wherein the third message is used to obtain the device type of the first device and the permission activation status of the first application.

26. The method according to claim 24, wherein the method further comprises:
displaying, by the second device, a second application interface when determining that the device type is the preset type and the permission activation status is unactivated, wherein the second application interface is used to activate the permission for the first application.

27. The method according to claim 24, wherein the preset type is a lightweight device.

28. The method according to claim 24, wherein the permission for the first application is use permission for an overall service in the first application or use permission for a service in the first application.

29. The method according to claim 24, wherein an activation manner of the first application comprises at least one of the following: a payment activation manner, a face authentication manner, a fingerprint authentication manner, and a character password authentication manner.

30. The method according to claim 24, wherein when an activation manner of the first application is a payment activation manner, the second device uses the second application to invoke an application market to perform in-app purchase, to activate the permission for the first application.

31. The method according to claim 24, wherein a first distributed communication SDK is deployed in the first device, a second distributed communication SDK is deployed in the second device, and message transmission between the first device and the second device is performed based on the first distributed communication SDK and the second distributed communication SDK.

32. The method according to claim 31, wherein the first message is sent by the first device to an interface of the second distributed communication SDK by invoking an interface of the first distributed communication SDK by using the first application, and the first message is transmitted to the second application through the interface of the second distributed communication SDK; and
the second message is sent by the second device to the interface of the first distributed communication SDK by invoking the interface of the second distributed communication SDK by using the second application, and the second message is transmitted to the first application through the interface of the first distributed communication SDK.

33. A readable medium, wherein the readable medium stores instructions, and when the instructions are executed on an electronic device, the electronic device is enabled to perform the application permission activation method according to any one of claims 14 to 23, or the application permission activation method according to any one of claims 24 to 32.

34. An electronic device, comprising: a memory, configured to store instructions executed by one or more processors of the electronic device, and a processor, wherein the processor is one of processors of the electronic device, and is configured to perform the application permission activation method according to any one of claims 14 to 23, or the application permission activation method according to any one of claims 24 to 32.
